# EUROPEAN PATENT SPECIFICATION

(11) **EP 2 461 120 B1**
(45) Date of publication and mention of the grant of the patent: **18.09.2013**
(21) Application number: 12001306.5
(22) Date of filing: 13.12.2010
(51) Int. Cl.: F24J 2/52, F24J 2/04, H01L 31/042, H01L 31/048, E04D 13/068, F24J 2/46

(54) **Joining system and Method of installing a weatherproof solar energy collection array as part of a roof**
Verbindungssystem und Verfahren zur Errichtung eines wetterfesten Sonnenkollektor-Verbunds als Teil eines Daches
Système de liaison et méthode d'installation d'une assemblage de collecteurs solaires comme partie d'une toiture

(30) Priority: 16.12.2009 GB 0921969; 05.11.2010 GB 201018745; 05.11.2010 GB 201018744
(43) Date of publication of application: 06.06.2012
(62) Divisional of application: 10796098.1
(73) Proprietor: Solar Century Holdings Limited, Waterloo London SE1 7AB (GB)
(72) Inventor: South, Alan, Royston, SG8 8SW (GB); Mckellar, Ashley, Graham, london, SE1 8JZ (GB); Gilhooly, Andrew, Gerrard, London SW18 2TG (GB); Attanasio, Marco, London, N11 3HH (GB); Burgess, Matthew James, London E7 0HF (GB); Davies, Daniel Gower, Bath BA1 6LR (GB); Kimberley, Malcolm John, London SE16 7WG (GB); Berry, Martyn Lohn, Hampshire PO7 4RQ (GB)
(74) Representative: Atkinson, Ralph

(56) References cited:
- EP-A1- 0 424 581
- DE-U1- 20 008 264
- DE-U1-202007 010 520
- FR-A1- 2 915 217
- JP-A- 2003 268 942

## Description

### 1. Field of the Invention

The present invention relates to installation a joiner piece for joining an end of an upper rail to an end of a lower rail and a method of installing a weatherproof solar energy collection array as part of a roof.

### 2. Description of the Related Art

Installation apparatus for supporting solar energy collection devices are known. Typically, installation apparatus is arranged to support the solar energy collection devices at a particular inclination and orientation relative to a support surface. In many applications, the support surface is a roof of a building.

A joining system according to the state of the art is shown in document EP-A-0424581.

### BRIEF SUMMARY OF THE INVENTION

According to a first aspect of the invention there is provided a joining system according to claim 1.

According to a second aspect of the invention there is provided a method of installing a weatherproof solar energy collection array as part of a roof according to claim 7.

According to the invention, the joiner piece has an outer section which is configured to fit around the outside of the upper rail.

Preferred embodiments of the invention include features defined by the dependent claims 2 to 6 and 8 to 15.

### BRIEF DESCRIPTION OF THE SEVERAL VIEWS OF THE DRAWINGS

*Figure* 1 shows a solar energy collection device secured as part of a roof structure of a building;
*Figure 2* shows installation apparatus for use in securing a solar energy collection device as part of a roof;
*Figure 3* shows a solar energy collection device;
*Figure 4* shows a rail for supporting a solar energy collection device;
*Figure 5* shows a cap strip for clamping solar energy collection devices in place;
*Figure 6* illustrates a rail being secured to a purlin;
*Figure 7* shows a horizontal element;
*Figure 8* shows a horizontal element supported on a rail;
*Figure 9*A shows a front view of a drip bar;

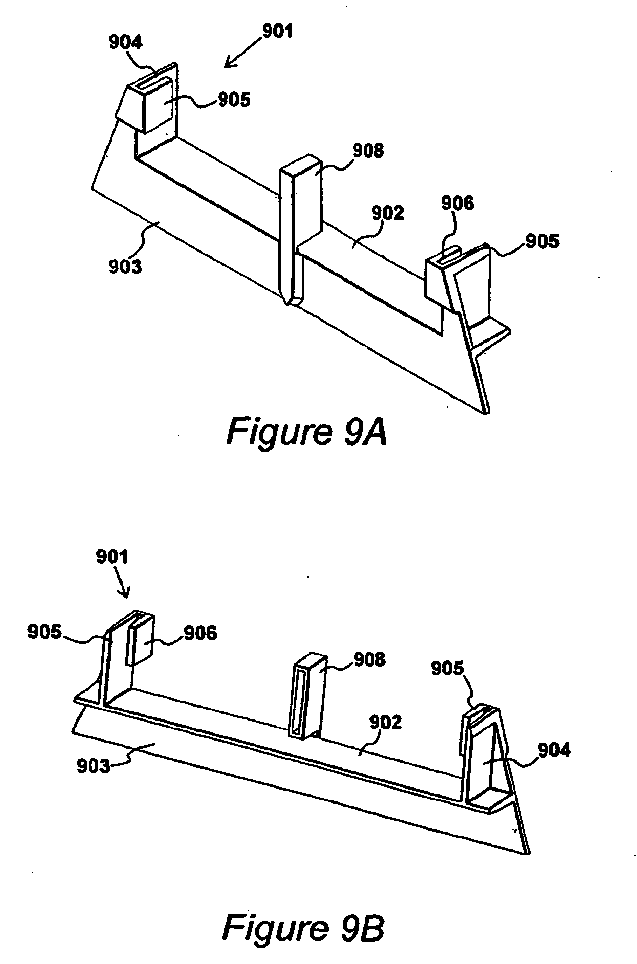

*Figure 9*B shows a back view of a drip bar;

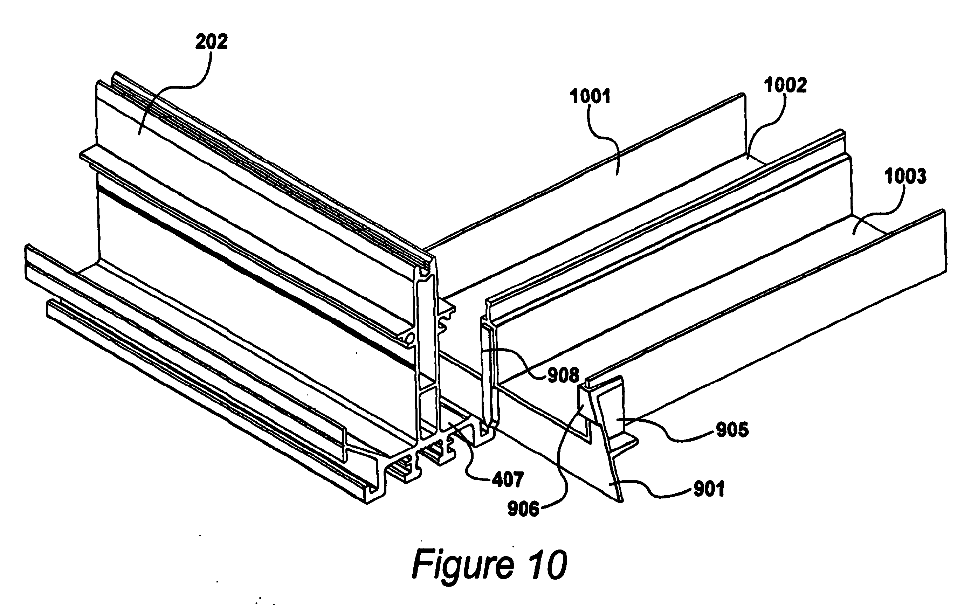

*Figure 10* illustrates a drip bar attached to a horizontal element;

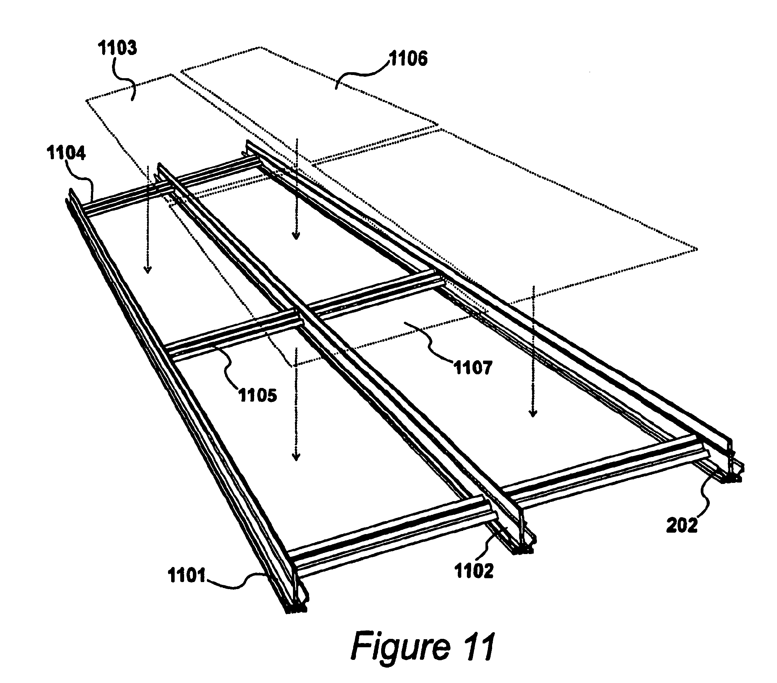

*Figure 11* shows how solar energy collection devices are installed;

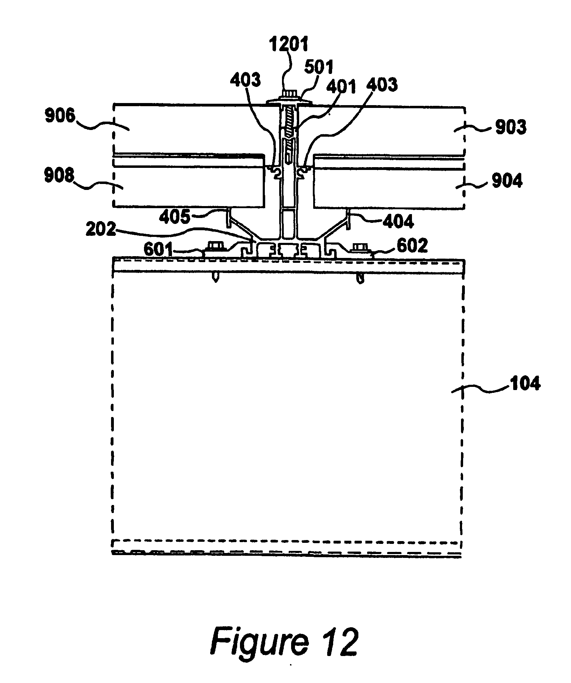

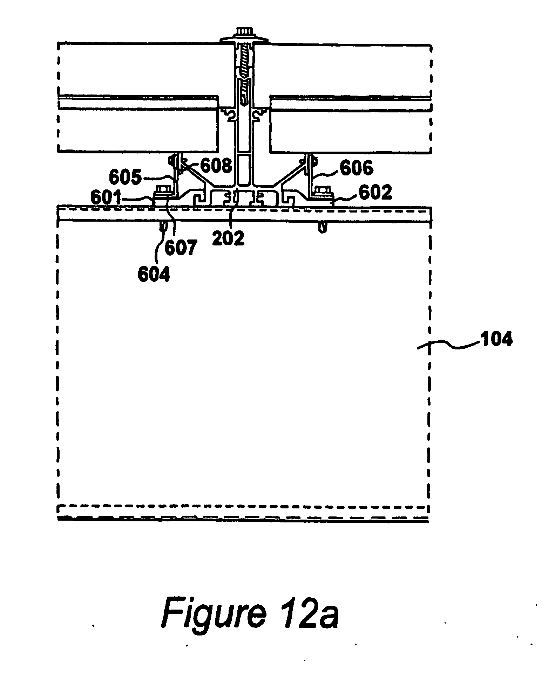

*Figure 12* shows a rail and two horizontal elements supporting two solar energy collection devices;

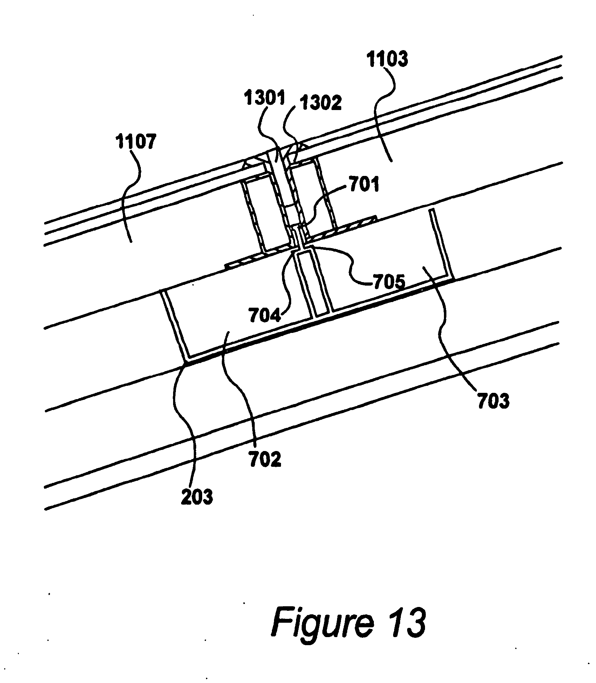

*Figure 13* shows a vertical cross section along a join between two solar energy collection;

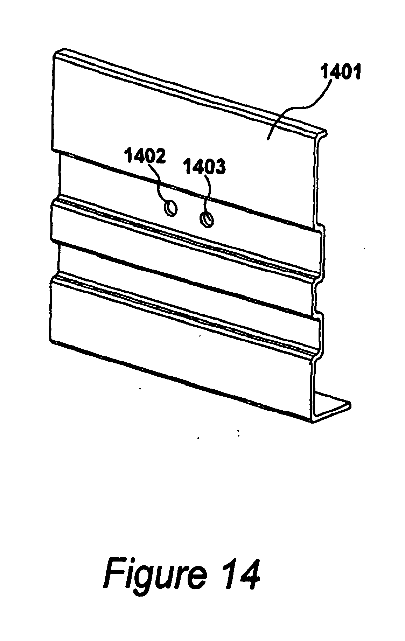

*Figure 14* shows an end cap;

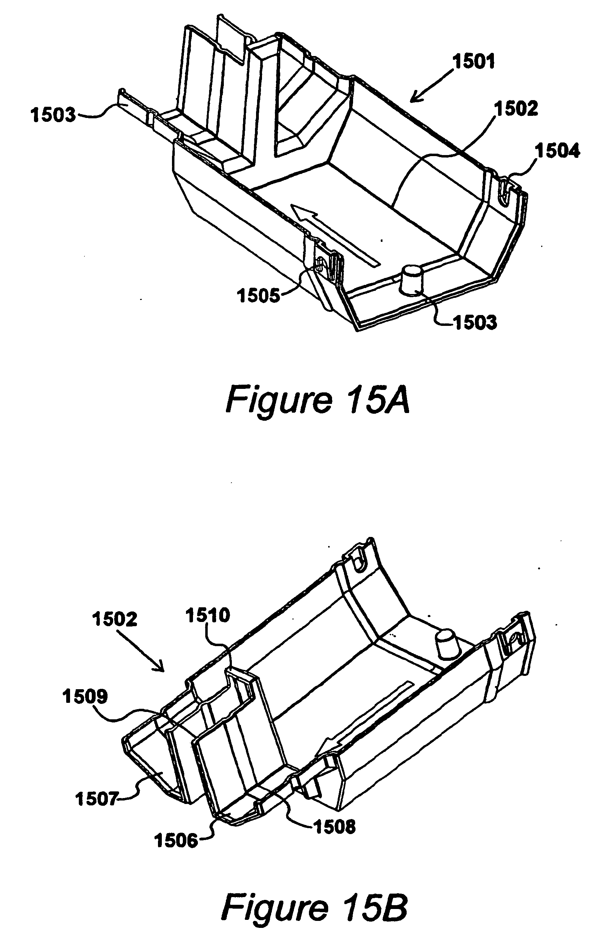

*Figure 15*A shows a front view of a joiner piece;
*Figure 15*B shows a back view of a joiner piece;

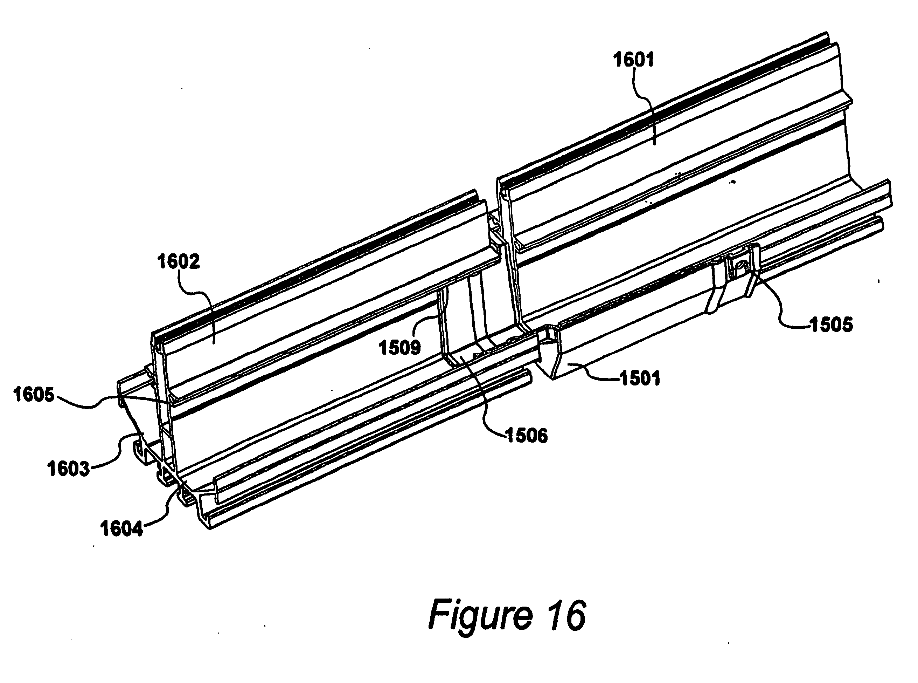

*Figure 16* shows a joiner piece connecting two sections of rail;

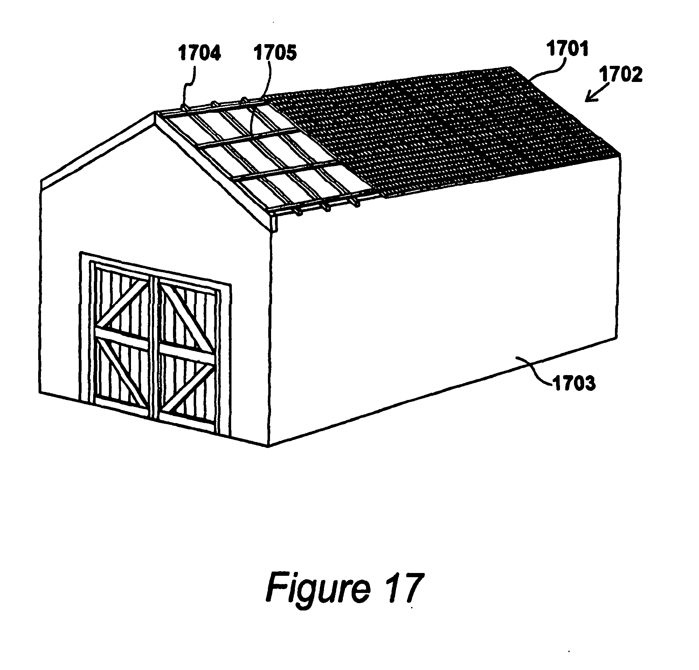

*Figure 17* shows a second solar energy collection device secured as part of a roof structure of a second building;

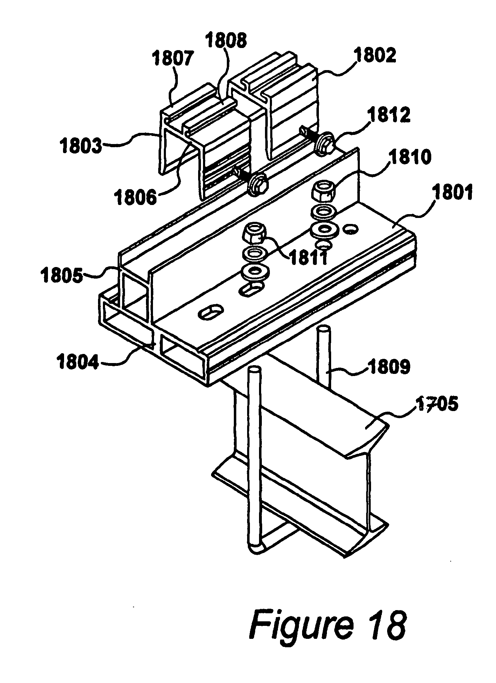

*Figure 18* shows a bracket and interface elements to be used in fixing a rail to a purlin;

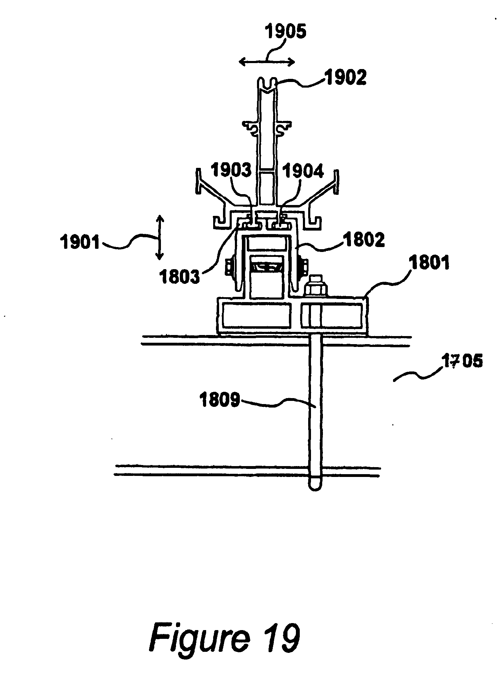

*Figure 19* shows details of the fixing shown in *Figure 14*;

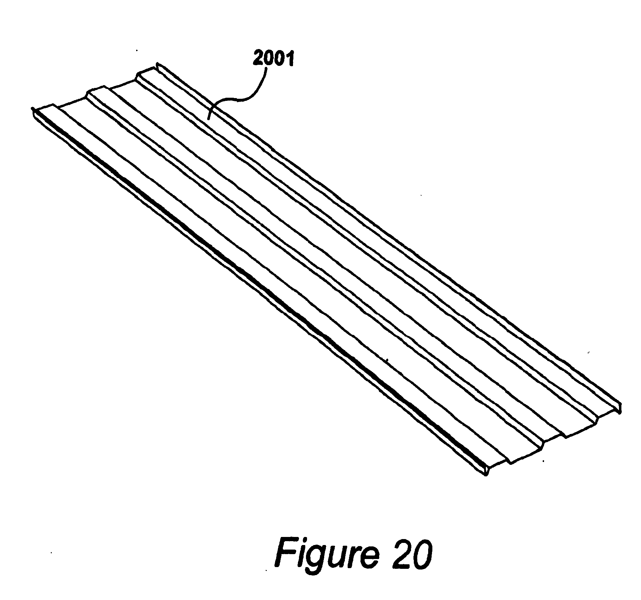

*Figure 20* shows a module protection sheet for use in the installation; and

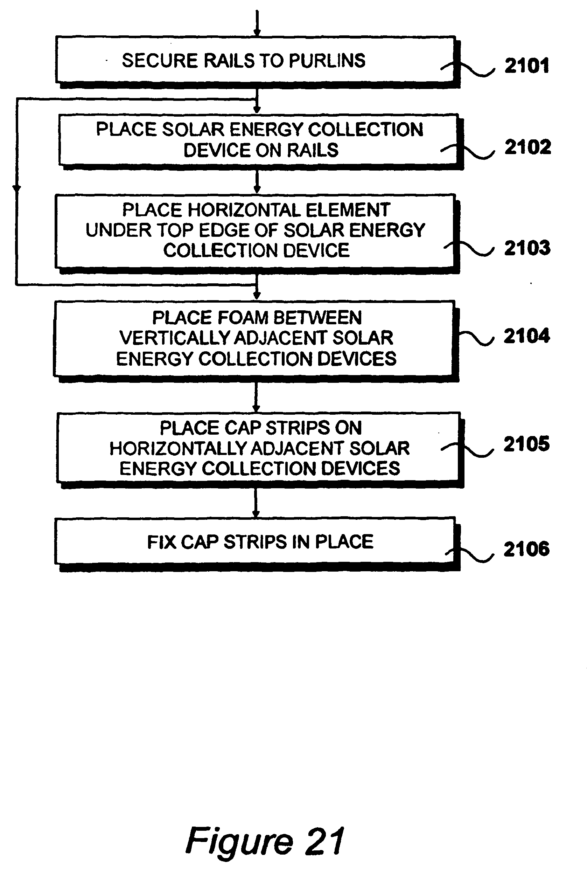

*Figure 21* shows steps taken to install the apparatus shown in the Figures.

### DETAILED DESCRIPTION OF THE PREFERRED EMBODIMENTS

### Figure 1

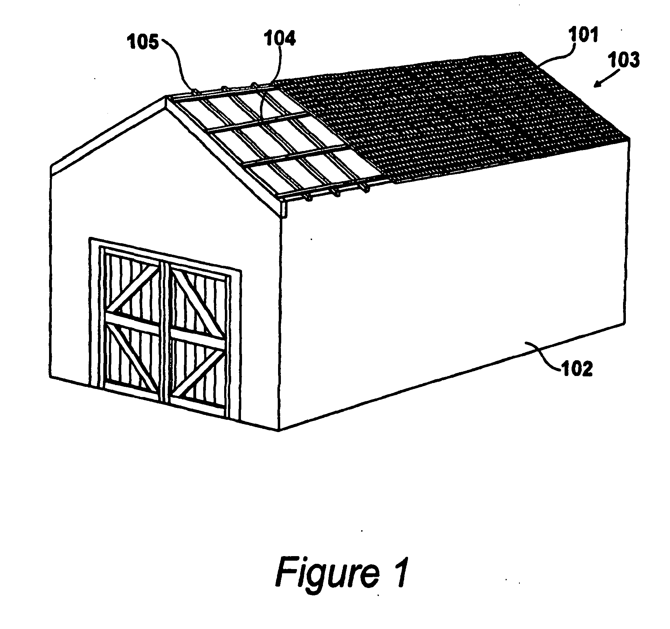

*Figure 1* shows a solar energy collection device **101** secured as part of a roof structure **103** of a building **102.** In this example, building **102** is an agricultural building such as a barn. Roof **103** comprises rafters, such as rafter **105** running from the ridge of the roof to the eaves, and purlins, such as purlin **104** secured to the rafters and running horizontally along the roof. The solar energy collection devices are secured to these purlins.

The solar energy collection device is secured so as to form part of roof **103.** In this example solar energy collection device **101** is a photovoltaic device. However, solar energy collection device **101** may be a solar-thermal device.

The integration of solar energy collection devices as part of a roof provides an architectural feature that also allows the building to generate electrical power. In many countries, local power generation from renewable sources is encouraged. In some instances, it is possible for a user to obtain payment for power supplied to an external source, such as a national grid, at a rate that is higher than the user must pay for receiving power from that external source. Consequently, a user may gain financially if the environment is optimised so as to maximise power generation while at the same time minimising power consumption.

Since the array of solar energy collection devices forms part of the roof, rather than sitting on top of the roof, it is important that it be as weatherproof as any normal roof. Water should be prevented from entering the building if at all possible.

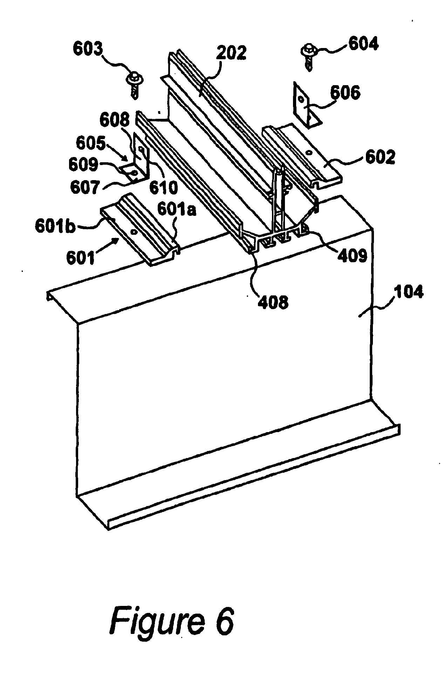

Solar energy collection devices may form part of the roof of a new build or could be provided as the result of the repair or replacement of portions of an existing build. Two methods of fixing the claimed apparatus to the purlins are described herein; the first, shown in *Figure 6**,* is more suitable for new builds, whereas the second, shown in *Figures 17* to *19**,* is more suitable for existing builds. However, either may be used on any type of building.

### Figure 2

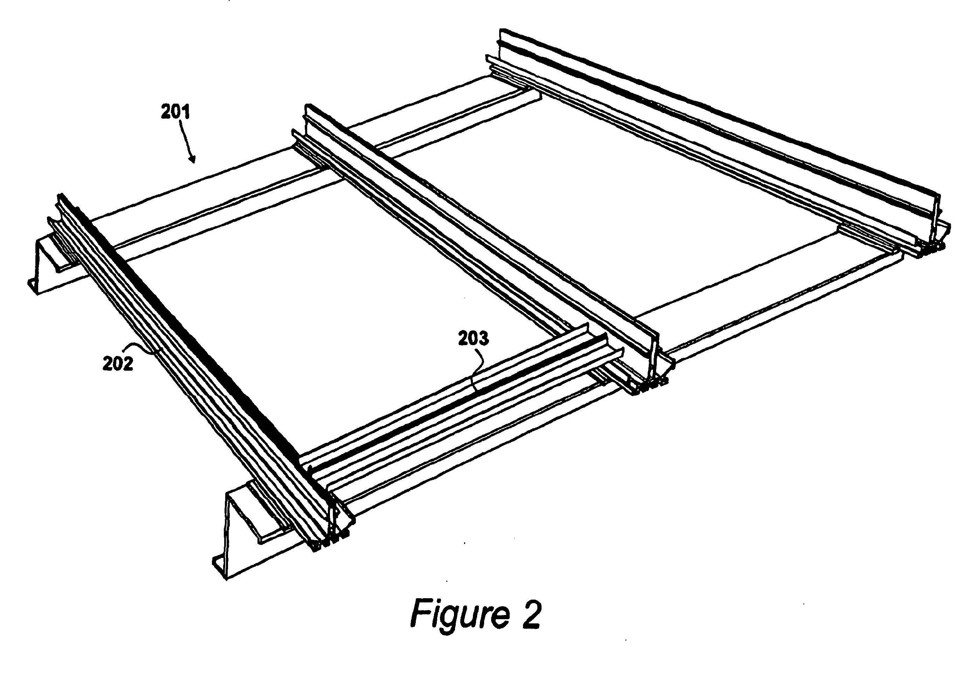

*Figure 2* shows installation apparatus **201** for use in securing a solar energy collection device as part of a roof. The term 'part of a roof' is used herein to generally describe the installation of solar energy modules as part of, rather than on top of, a roof. Typically, therefore, solar energy collection devices may be installed so as to be flush with common roofing materials. Thus, for example, when installed as part of a roof, solar energy collection devices may be perceived as replacing the outermost layer of a roof structure, that presents the outer surface of the roof, and for example allows flashing to be used at interfaces in the normal way.

Apparatus **201** comprises a number of rails, such as rail **202,** secured to roof elements, which in this example are purlins. The apparatus also comprises a plurality of horizontal elements, such as horizontal element **203.** The rails extend perpendicularly to the purlins, down the roof from the ridge to the eaves. The horizontal elements sit on the rails perpendicular to them and parallel to the purlins. The rails are spaced apart by a distance slightly longer than the short sides of a solar energy collection device, and the horizontal elements are spaced apart by a distance slightly longer than the long sides. Each solar energy collection device is therefore placed in the aperture defined by two rails and two horizontal elements.

Each of the rails and horizontal elements has a support plane on which an edge of a solar energy collection device rests. Thus each solar energy collection device is supported around all four edges and held away from the purlins.

### Figure 3

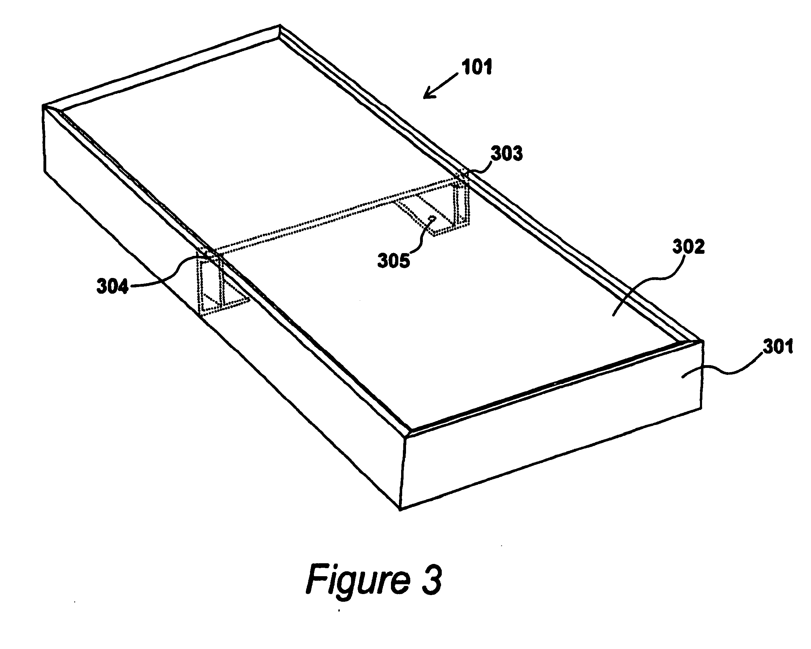

*Figure* 3 shows solar energy collection device **101.** It consists of a frame **301,** in this example made of aluminium, that supports a solar energy collection panel, which in this example is a photovoltaic sheet **302.** A view of a cross-section through the device is shown in dotted lines, showing the shape of the frame **301.** The joints between the edges of sheet **302** and frame **301** are sealed, for example by seals 303 and **304.** These may be silicone extruded gasket-type seals, gunned-in mastic or pieces of compressed foam.

Four lower edges of solar energy collection device **101** are defined by the four lower edges of the frame. These edges are supported by the installation apparatus herein described in order to support the weight of the solar energy collection device **101.**

In the example described herein the solar energy collection devices are oriented, when installed in an array, such that the short edges extend in the direction that the purlins extend. This orientation is referred to herein as 'portrait'. In an alternative arrangement, the solar energy collection devices are oriented such that the long sides extend in the direction that the purlins extend. This orientation is referred to herein as `landscape'. In this example, solar energy collection device **101** is substantially rectangular, but a square one could also be used.

The nature of seals **303** and **304** varies depending on the manufacturing method of the solar energy collection device, and after installation the seals may degrade over time. Thus it cannot be guaranteed that these seals are weatherproof. Solar energy collection devices often have drainage holes, such as drainage hole 305, which allow any water that does get through the seals to drain away.

The frame could be manufactured from materials other than aluminium, and other solar energy collection panels could be used in the device.

Given that solar energy collection devices such as device **101** are frequently not weatherproof, installation apparatus **201** therefore not only provides support for the devices but also has water management features to ensure that any water that does drain from the bottom of a solar energy collection device is carried away, and not allowed to leak into building **102.**

### Figure 4

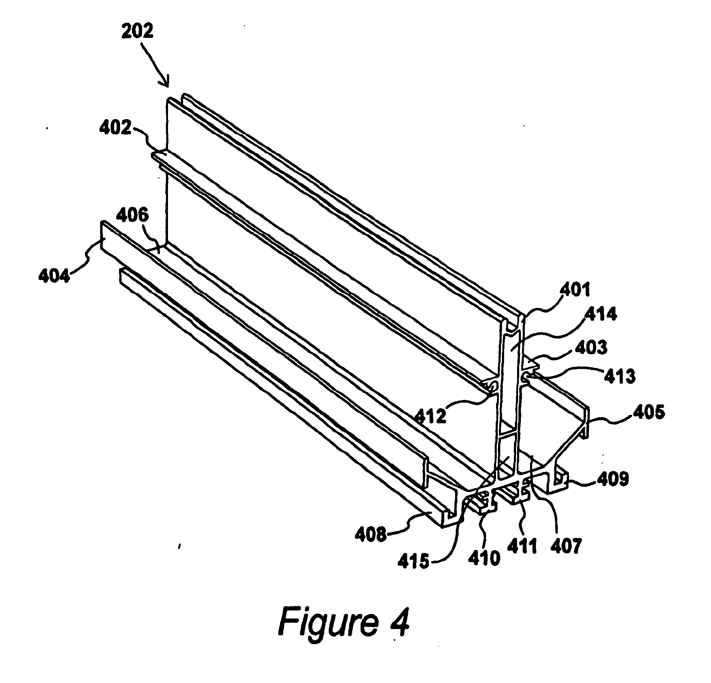

A portion of rail **202** is shown in more detail in *Figure 4**.* It comprises an upwardly thrusting element **401,** two horizontal support planes **402** and **403,** two edges **404** and **405** defining side gutters **406** and **407,** two upstanding elements **408** and **409,** and two feet **410** and **411.** The rail is symmetrical and thus for each of these pairs of elements, one is on each side of upwardly thrusting element **401.**

On each side of rail **202,** the support plane **402** or **403** provides support for a long edge of a solar energy collection device, while the side gutter **406** or **407** carries away any water that collects on that side. Above the support planes, the sides of the upwardly thrusting element **401** are straight; thus on each side the support plane and the side of the upwardly thrusting element form a right angle suitable for receiving the lower edge of a solar energy collection device. The support planes are relatively narrow. This discourages water collection and backtracking underneath the solar energy collection device, and encourages precise installation.

Rail **202** further includes screw flutes **412** and **413** so that end caps can be fitted to the ends of the rail. These are configured so that the openings face downwards in order that water cannot collect in them.

Rail **202** may either be fixed directly to purlin **104,** as shown in *Figure 6**,* or fixed in an adjustable manner as is shown in *Figures 17* to 19.

Rail **202** is constructed from extruded aluminium that can then be cut to length, which is the height of the array of solar energy collection devices to be installed. Alternatively, shorter lengths can be used and fixed together with joiner pieces, as shown in *Figure 16**.*

In order to reduce the weight and cost, the internal part of upwardly thrusting element **401** is mainly hollow. It comprises two box sections, upper box section **414** and lower box section **415.** Fixings are made into upper box section **414** from the top, meaning that water may penetrate it. Fixings may be made into lower box section **415** from the bottom for cable management, and so water should not be present in this section. Thus the two box sections are kept separate.

### Figure 5

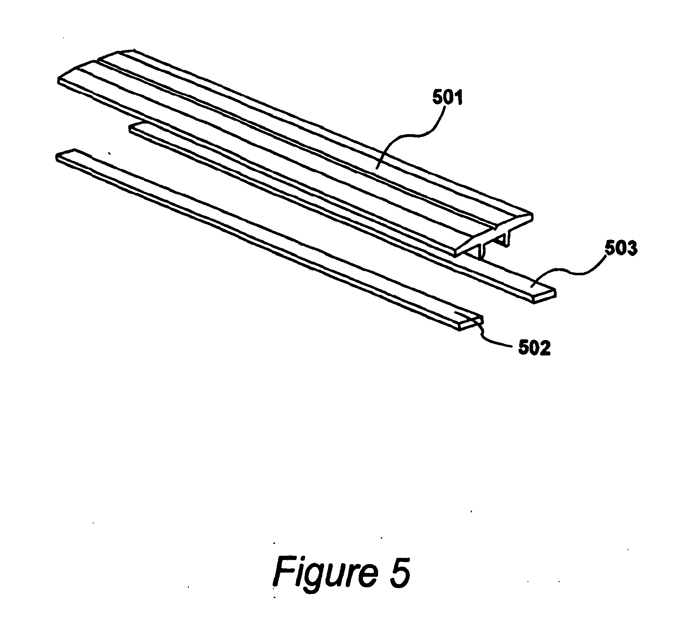

In order to clamp the frame of solar energy collection device **101** to rail **202,** a clamping element is used, which in this example is provided by a cap strip. *Figure 5* shows a portion of cap strip **501.** Referring back to *Figure 4**,* when two solar energy collection devices are supported, one by each of support planes **402** and **403,** cap strip is placed over rail **202** to cover the gap between the devices. Strips of foam **502** and **503** provide a seal between cap strip **501** and the frames of the solar energy collection devices. Because the quality of this seal can be controlled at installation, it should not leak during the lifetime of the roof. However, should the seal fail any water will be directed into one of side gutters **406** and **407.**

Cap strip **501** is fixed with screw fixings into upper box portion **414** of rail **202.** When these fixings are tightened, the cap strip clamps the solar energy collection devices to the rails.

Other clamping devices could be used that are suitable for clamping the frame of a solar energy collection device to a rail.

### Figure 6

Rail **202** is fixed to purlin 104 using clips **601** and **602.** Clip **601** has an overlap portion **601a** that fits over upstanding element **408,** while clip **602** fits in a similar fashion over upstanding element **409.** Clip **601** is secured to purlin **104** using a fixing means such as screw fixing **603** through an aperture defined in securing portion **601** b. Clip **602** is similarly secured using screw fixing **604.**

In addition, when fixing the rail to some purlins, L-shaped brackets **605** and **606** may be used. Bracket **605** has a foot portion **607** and a perpendicular upright section **608.** An aperture **609** is formed in foot portion **607** and a second aperture **610** is formed in upright portion **608.** Bracket **606** is similar. The use of these brackets will be described further with respect to *Figure 12a**.*

### Figure 7

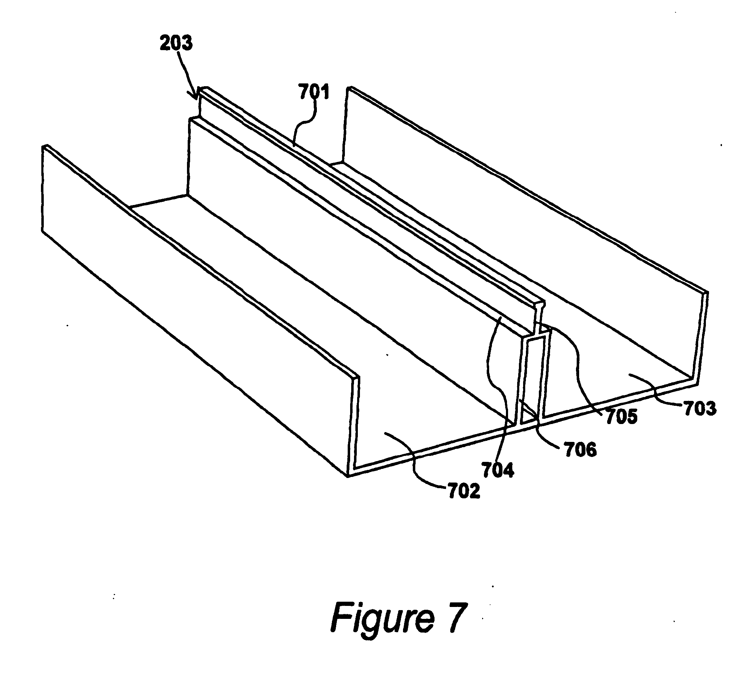

As can be seen in *Figure* 2, each solar energy collection device is supported along its long edges by two rails, such as rail **202.** Each of the short edges is supported by a horizontal element such as horizontal element **203,** a portion of which is shown in *Figure* 7. It should be noted that a solar energy collection device can be installed in the landscape orientation instead, depending upon the configuration of the roof and the solar energy collection devices. However, in all cases the rails run up and down the roof and the horizontal elements are placed horizontally.

Horizontal element **203** comprises an upwardly thrusting tongue **701.** Like rail **202,** horizontal element **203** is symmetrical about this tongue. It therefore comprises two channels **702** and **703,** one on each side, and two support planes **704** and **705,** one on each side. Like rail **202,** the support planes are relatively narrow.

Horizontal element **203** is constructed from extruded aluminium that can then be cut to size depending on the width of the solar energy collection devices to be installed, and hence on the distance between the rails.

Thus, upon installation, each support plane supports a short edge of a solar energy collection device. The devices abut tongue **701,** thus being held in place. In order to minimise the weight of horizontal element **703,** tongue **701** is not the same width all the way up, but is formed with a flange at the top which defines the separation of vertically adjacent solar energy collection panels. Similarly, the space underneath the support planes is hollow. Fixings may be made into this hollow portion **706** for cable management, and therefore it should be kept dry.

### Figure 8

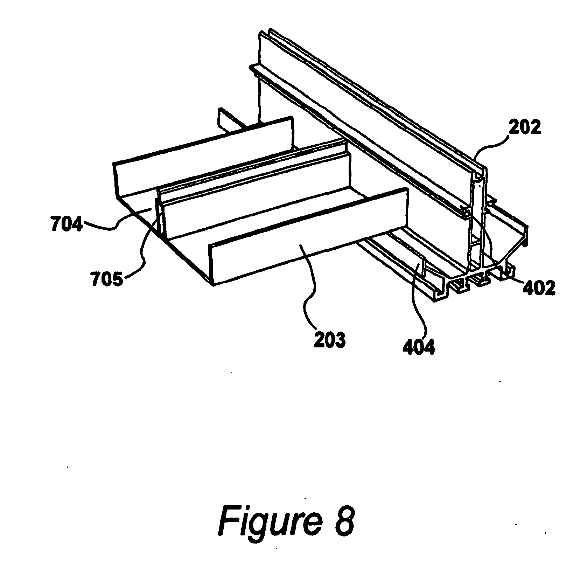

The way in which rail **202** and horizontal element **203** interact is shown in *Figure 8**.* Once rail **202** has been fixed in position to the purlins as shown in *Figure 6**,* horizontal element **203** is placed upon the edge **404** of rail **202.** The two pieces are so dimensioned such that support plane **402** of rail **202** and support planes **704** and 705 of horizontal element **203** are aligned with respect to the pitch of the roof, thus providing a series of surfaces on which the edges of a solar energy collection device can be placed.

The joint between the edge **404** of rail **202** and the underside of horizontal element **203** can be sealed with a gasket, or a drip bar may be used.

### Figures 9A and 9B

Figures 9A and 9B show front and back views respectively of a drip bar **901.** Drip bar **901** is configured to fit over the end of a horizontal element, such as horizontal element **203,** and prevent water from backtracking underneath the horizontal element when it drips out of a channel.

Drip bar **901** is fabricated from a suitable plastic and comprises a flat surface **902** attached to a perpendicular skirt **903.** The skirt has a trapezium shape to provide extra protection at each side of the horizontal element, because the element is tilted in use. It further comprises two upstanding sides **904** and **905,** each having a clip **906** and **907** respectively, and an upstanding central element **908.**

### Figure 10

*Figure 10* illustrates drip bar **901** fitted to an end of a horizontal element. The two sides **904** and **905** clip around the sides of a horizontal element **1001,** with the clips **906** and **907** holding it in place. Central element **908** prevents water from entering the hollow portion of horizontal element **1001.**

Horizontal element **1001** is then placed on an edge of rail **202.** Any water in channel **1002** or **1003** of horizontal element **1001** drips into side gutter **407** of rail **202.** Drip bar **901** prevents the water from backtracking under horizontal element **1001,** dripping around the edge of a channel, or entering the hollow portion of horizontal element **1001.**

### Figure 11

An array of solar energy collection devices are installed as shown in *Figure 11**.* A plurality of rails, such as rails **1101, 202** and **1102,** are laid out running eaves to ridge, equally spaced across the roof, or across the area of the roof to be covered by the array. A horizontal element is placed between and upon each pair of rails, and a solar energy collection device is placed with its long edges being supported by the pair of rails, and its lower short edges being placed upon the horizontal element. A further horizontal element can then be placed on the pair of rails, and allowed to slide underneath the top short edge of the solar energy collection device. A further solar energy collection device is then placed upon the rails and this horizontal element. In this way, the horizontal elements are held in place by the solar energy collection devices. The horizontal elements and solar energy collection devices are both supported by the rails.

The weight of the solar energy collection devices is in this embodiment also taken by the horizontal elements. However, this is not necessary as the rails are sufficient to support the weight of the devices. The bottom of the devices are in contact with the support planes of the horizontal elements because this allows the horizontal elements to be clamped between the frames of the devices and the rails. Thus the arrangement herein described provides a method of securing not only the solar energy collection devices but also the horizontal elements without creating screwholes or other fixing apertures into either.

The lower short edges of the row of solar energy collection devices lowest down the roof, adjacent the eaves, do not rest upon a horizontal element, but form the lower edge of the roof. Any water dripping from the underside of these solar energy collection devices can drip directly into a roof gutter at the eaves.

*Figure 11* illustrates a portion of the array half way up the roof, where, for example, solar energy collection device **1103** is to be supported by rails **1101** and **1102** and horizontal elements **1104** and **1105.** The gap between solar energy collection device **1103** and its horizontally adjacent solar energy collection device **1106** is filled by a portion of a cap strip, such as cap strip **501.** The gap between solar energy collection device **1103** and its vertically adjacent solar energy collection device **1107** is filled by a piece of compressible foam, which forms a weatherproof seal.

### Figure 12

A view down the roof shown by arrow A in *Figure 11* is illustrated in *Figure 12**.* Rail **202** is secured to purlin **204** by clips **601** and **602.** Horizontal element **1108** rests on edge **405** of rail **202,** while horizontal element **1104** rests on edge **404** of rail **202.**

Solar energy collection device **1106** is placed upon support plane **403** of rail **202,** and a support plane (not visible) of horizontal element **1108.** Similarly, solar energy collection device **1103** is placed on support plane **403** of rail **202** and a support plane (not visible) of horizontal element **1104.**

Cap strip **501** covers and seals the gap between the frames of solar energy collection devices **1103** and **1106.** It is fixed into place on rail **202** with a self-drilling screw **1201.** When tightened, this clamps the frame of each solar energy collection device onto its supporting planes. This also has the effect of clamping each horizontal element onto rail **202.** Thus the rails and horizontal elements form an apparatus that supports solar energy collection devices without any need for additional screw holes through either the devices, the rails or the horizontal elements. This improves the water management of the system, since any screw hole is a possible water avenue; further, having fewer screws reduces installation time and complexity. With this installation apparatus, any water that seeps through any of the gaps between the solar energy collection devices, or through a joint in a solar energy collection device, will be caught in either the side gutters of the rails or the channels of the horizontal elements. Any water in the channels drains into one of the side gutters, as shown in *Figure* 12, and then it only remains to manage the run-off from the side gutters, for example by allowing then to drain into a standard roof gutter at the eaves.

Further, by restricting any water to the channels and the side gutters, water is prevented from entering the 'dry side' of the installation. The wet side is defined as being the channels and tongue of each horizontal element, and the area of each rail between and above the two edges, including the top box section. All the rest of the roof is considered to be the dry side. The fixings to the top of the array, such as the joints of the solar energy collection devices, and the cap strip fixings, are on the wet side of the installation. On the dry side are the fixings into purlin **104** of clip **601** and **602,** and other fixings, such as those for cable management, into the lower box section of each rail and the hollow portion of each horizontal element. It is therefore important that these areas be kept dry so that these fixings do not become possible leak sites. Below the purlins there is generally no further weatherproofing or ceiling, and therefore any water leaking through would drip directly into the building.

The installation may also include module protection sheets to catch any water that escapes to the dry side. These should not be necessary but can be useful to protect the solar energy collection devices from the underside, and also to create a - greater appearance of weatherproofing. A module protection sheet is shown in *Figure* 20.

### Figure 12a

Clips **601** and **602** secure rail **202** to purlin **104** in a manner that allows for the thermal expansion of rail **202.** Over a typical temperature range for a roof, a metal object such as rail **202** can expand by around 1mm per metre. For a rail several metres long, therefore, thermal expansion is not insignificant. If the rail were secured to each purlin without being able to move, thermal expansion could cause damage to the array. The method of securing herein described, using clips **601** and **602,** allows for thermal expansion. Because an open-ended downwardly facing channel in each clip interlocks with a respective upstanding element of a rail, each rail can move up and down the roof (ie in the direction of the pitch of the roof), thus allowing for thermal expansion, but cannot move side to side (ie horizontally), thus keeping the array secure on the roof.

In an embodiment, each rail is additionally and immovably secured to a single purlin, fixing it in position to that purlin. This additional securing provides a fixed point about which the rail can expand. This would typically be at the top-most purlin, ie the one highest up the roof.

A method of providing this additional securing is illustrated in *Figure 12a**.* L-shaped bracket **605,** illustrated in *Figure* 6, is secured to purlin **104** by passing screw **604** through aperture **609** before passing it through clip **602.** Thus, foot portion **607** of bracket **605** is held against the top of clip **602.** A further screw **1202** is used to secure the upright portion **608** of bracket **605** to edge **405** of rail **202.** Bracket **606** is similarly attached on the other side of rail **202.**

These brackets attach the rail to this purlin in a non-moveable fashion. Thus, any expansion of the rail will cause movement within the clip on the other purlins, but not the one to which it is immovably attached.

### Figure 13

*Figure* 13 is a cross-sectional view along the join between two vertically adjacent solar energy collection devices **1103** and **1107,** viewed from the side. The top short edge of the frame of solar energy collection device **1107** rests on the downward facing support plane **705** of horizontal element **203,** while the lower short edge of the frame rests on the upward facing support plane **703** of horizontal element **203.** Compressible foam strip **1301,** compressed under the weight of solar energy collection device **1103,** provides a seal for the gap between the two devices.

Any water seeping through the joints of solar energy collection device **1103** will tend to do so at the lower joint **1302,** thus collecting in upper channel **703** of horizontal element **203.** Also, any water leaking from the joint sealed by foam **1301** will find its way to lower facing channel **702** of horizontal element **203.** Both of these channels then drain into a side gutter of a rail.

Water may also seep through the joints on the long side of the frame of a solar energy collection device. In this case, it will drip through a drainage hole into a side gutter of the supporting rail.

It can be seen in *Figure* 13 how the upwardly facing tongue **701** provides a spacing element between solar energy collection devices **1103** and **1107.** Similarly, referring back to *Figure* 12, upwardly thrusting element **401** of rail **202** provides a spacing element between solar energy collection devices **1103** and **1106.** Thus, as long as the rails are installed parallel with each other, the rails and horizontal elements provide a natural method of 'squaring-up' the solar energy collection devices. Because the solar energy collection devices sit on the support planes of the rails and the horizontal elements and are separated by the upwardly thrusting elements of the rails and the upwardly thrusting tongues of the horizontal elements, the solar energy collection devices will naturally square up under gravity. Thus it is easier for the installer to put them all into place before clamping them all into position with the cap strips. An array of solar energy collection devices in which the devices are exactly square to each other is not only aesthetically pleasing but more likely to be weatherproof.

### Figure 14

At the bottom of the array, at the eaves of the roof, an end cap, such as end cap **1401** shown in *Figure* 14, is fixed to each rail by fixing through each of screw holes **1402** and **1403** into one of the screw flutes in the rail. It comprises a short length of extruded aluminium with a corrugated cross-section. It provides a windshield for the side gutters of the rail to which it is fixed, to prevent water being blown back up them in windy conditions.

### Figures 15A and 15B

The foregoing description describes a solar-energy-collecting weatherproof roof including an array whose size is limited by the length of the rails, such as rail **202.** There is an upper bound to the length of rail that can be transported and handled; further, it may reduce transportation and other costs to use shorter lengths of rail. It would therefore be advantageous to be able to join two lengths of rail together, either to increase the size of the array or to reduce costs of installing a smaller array. However, such a join should preferably be watertight in order to preserve the weatherproof nature of the array.

*Figures 15A* and *15B* show a front and back view respectively of a suitable joiner piece **1501.** It is fabricated from a suitable plastic and comprises an outer section **1502** and an inner section **1503.** Outer section **1502** is configured to fit around the outside of a first section of rail, while inner section **1503** is configured to fit inside the side gutters of a second section of rail.

Outer section **1502** comprises an upstanding peg **1504** configured to locate between the feet of the first section of rail (a screw may be fixed into the lower box section here), and two screw holes **1505** and **1506,** so that joiner piece **1501** can be fixed to the edges of the first section of rail.

Inner section **1503** is ribbed to provide flexibility and a tight fit within the side gutters of the second section of rail. It comprises a first gutter portion **1507** and a second gutter portion **1508,** each configured to fit within one side gutter. Gutter portion **1507** has a low outer side **1509** and a high inner side **1510,** and gutter portion **1508** is symmetrically similar. The high sides of the gutter portions are configured to locate underneath the screw flute of the second section of rail. The two gutter portions are connected by a central portion **1511** configured to cover the lower box section of the second section of rail, which is open.

### Figure 16

*Figure* 16 shows joiner piece **1501** joining two sections of rail **1601** and **1602.** Outer portion **1502** of joiner piece **1501** fits around the outside of rail section **1601,** while inner portion **1503** of joiner piece **1501** fits inside the side gutters **1603** and **1604** of rail section **1602.** Any water in one of the side gutters of rail section **1601** passes via the inner portion **1503** of joiner piece **1501** to the corresponding side gutter of rail section **1602.**

Joiner piece **1501** is held in place by the outward pressure of each of the gutter portions and the location of the high side of each portion under the screw flutes. Thus, for example, the high side **1510** of gutter portion **1507** is located against the underside of screw flute **1605.** This prevents twisting of the joiner piece in relation to rail section **1602.**

Joiner piece **1501** may be secured to rail section **1601,** for example by screws, through the screw holes, hole **1506** being shown. These screw holes are so high up the side of the gutter that water would not leak through them, since water is not expected to reach a high level in the side gutters.

In addition to joiner piece **1501,** an alignment component fabricated from metal may be used to join the two rail sections. Such a component would provide structure so that the rails are aligned during installation and remain so for the life of the array.

When two rail pieces are joined together to form a rail, then it may still be preferred to attach each rail piece immovably to a purlin, as described with respect to *Figure 12a**.* In this case, the higher piece (i.e. the rail piece further up the roof) is immovably attached to the purlin directly above the join, and the lower piece is immovably attached to the purlin directly below the join. This prevents the joiner piece from being damaged by expansion of the rail.

### Figure 17

The method of fixing the rails to the purlins shown in *Figure* 6 is suitable for buildings on which the purlins are aligned with one another with respect to the pitch of the roof. This is generally the case on newer buildings. However, on older buildings it is generally not the case. Thus an alternative method of fixing the rails to the purlins is shown with respect to *Figures 17* to *19*.

An array of solar energy collection devices such as device **1701** is fitted to the roof **1702** of a building **1703.** In this example building **1703** is an agricultural building such as a barn. Roof **1702** comprises rafters, such as rafter **1704** running from the ridge of the roof to the eaves, and purlins, such as purlin **1705** secured to the rafters and running horizontally along the roof. The solar energy collection devices are secured to these purlins.

### Figure 18

The installation apparatus for installing this array of solar energy collection devices comprises, in addition to rails and horizontal elements as previously described, a number of brackets, such as bracket **1801,** and a number of interface elements, such as interface elements **1802** and **1803.**

As shown in *Figure* 18, bracket **1801** comprises a base element **1804** through which various apertures are defined, and an upstanding element **1805.** Interface elements **1803** and **1802** are identical, and each comprises a main portion **1806** having an inverted U-shaped cross-section, and two hooks **1807** and **1808** on the top.

To install this apparatus, bracket **1801** is first fixed to a purlin, such as purlin **1705.** In this example this is done using a U-bolt **1809** which passes around purlin **1705** and through two apertures in the base **1804** of bracket **1801,** where it is secured by nuts **1810** and **1811.** However, any other method of fixing the bracket to the purlin may be used.

Interface elements **1803** and **1802,** which are identical, are used with one in the reverse configuration to the other so that the hooks face in opposite directions. They are each slotted over the upstanding element **1805** of bracket **1801** and fixed into place with self-drilling screws, such as screw **1812.** The interface elements can either sit directly on top of upstanding element **1805** or be fixed at a higher position.

### Figure 19

*Figure* 19 shows a view up roof **1702,** with bracket **1801** fixed to purlin **1705,** and interface elements **1802** and **1803** secured to bracket **1801.** As shown by arrow **1901,** the height of the interface elements relative to bracket **1801** can be adjusted before fixing. This allows an installer to take account of the fact that the purlins on the roof may not be aligned with one another with respect to the pitch of the roof. Thus, interface elements can be fixed higher on some purlins than others, so that the top of all of the interface elements are aligned with respect to the pitch of the roof. Rail **1902** can then be attached levelly to the interface elements in a situation where it might not be possible to attach the rail directly to the purlins because of their misalignment. Further, all the rails across the roof can be aligned using this system.

The hooks of the interface elements fit over the feet **1903** and **1904** of rail **1902.** Rail **1902** is thus held securely by interface elements **1802** and **1803,** but a degree of movement in the direction up and down the roof is possible. This allows for thermal expansion of the rail. Once the rails are fitted in this manner, then horizontal elements and solar energy collection devices can be installed in the same manner as previously described.

Thus the design of the rail, having upstanding elements **408** and **409** as well as feet **412** and **411,** is such that it is suitable for use either in a system where it is secured directly to the purlins, or in a system where it is secured to interface elements that provide a first part of a coupling arrangement, a bracket secured to the purlins providing a second part of this coupling arrangement, wherein the coupling arrangement is configured to allow adjustment of the interface elements relative to the bracket for enabling the distance of the rail from the bracket to be adjusted.

### Figure 20

Although the fixing apparatus shown in *Figures* 17 to 19 allows rails to be installed level on a roof having uneven purlins, it is still possible that, on such a roof, the array might not be quite weatherproof. Thus, whether in order to provide additional weatherproofing, in order to instil confidence in building users, or to provide protection for the underside of solar energy collection devices, it is possible to install module protection sheets on the underside of the array.

A module protection sheet is shown in *Figure 20**.* It is a plastic corrugated tray designed to clip over the edges of adjacent rails, thus providing a barrier between the underside of the solar energy collection devices and the inside of the building.

### Figure 21

*Figure 21* illustrates steps taken to install the apparatus described herein.

At step **2101** rails are secured to purlins, using either of the techniques described above. Each eaves to ridge rail may be either a single rail or a number of rail sections joined with joiner pieces as shown in *Figure **16*****.** At step **2102,** a solar energy collection device is placed on a pair of rails, and at step **2103** a horizontal element is placed above and under the top edge of the solar energy collection device. These steps are repeated as necessary for the number of devices to be installed.

At step **2104** foam strips are placed between vertically adjacent solar energy collection devices, and at step **2105** cap strips are placed on horizontally adjacent solar energy collection devices. At step **2106** the cap strips are fixed into place.

## Claims

1. A joining system comprising an upper rail (1601) having at least one side gutter (1603), a lower rail (1602) having at least one side gutter (1603) and a joiner piece (1501) for joining an end of the upper rail (1601) to an end of the lower rail (1602), said joiner piece (1501) comprising
an outer section (1502) configured to fit around the outside of the upper rail (1601), and
an inner section (1503) configured to fit inside the side gutter (1603) of the lower rail (1602),
such that in use said joiner piece (1501) channels fluid from the gutter (1603) of said upper rail (1601) to the gutter (1603) of said lower rail (1602).

2. A joining system according to claim **1,** wherein each of said rails (1601, 1602) has two side gutters (1603, 1604), and said inner section (1503) of said joiner piece (1501) is configured to fit inside both side gutters (1603, 1604) of said lower rail.

3. A joining system according to claim **2,** wherein said inner section (1503) comprises two gutter portions (1507, 1508), each configured to fit within a side gutter (1603, 1604) of said lower rail (1602), and a central portion (1511) connecting the two gutter portions.

4. A joining system according to any of claims **1** to **3,** wherein the outer section (1502) of said joiner piece (1501) comprises an upstanding peg (1504) configured to locate within a channel in the underside of said upper rail.

5. A joining system according to any of claims **1** to **4,** wherein the outer section (1502) of said joiner piece (1501) defines two apertures (1505, 1506), one at each side, configured to allow said joiner piece to be connected by a securing means to the outside of said rail.

6. A joining system according to any of claims **1** to **5,** wherein said inner section (1503) of the joiner piece (1501) is ribbed.

7. A method of installing a weatherproof solar energy collection array as part of a roof (103), said roof comprising a plurality of purlins (104), comprising the steps of:
obtaining a first rail (1601) and a second rail (1602) substantially identical in cross-section, each of said rails comprising at least one side gutter (1603);
fixing said first rail (1601) to at least one purlin (1705), and fixing said second rail (1602) to at least one other purlin (1705), said second rail being aligned with said first rail in the direction of the pitch of the roof, such that the downwards end of said first rail and the upwards end of said second rail are adjacent;
placing a joiner piece (1501) around and underneath the downwards end of said first rail; and
fitting said joiner piece within said side gutter (1603) of said second rail at the upwards end of said second rail;
such that said joiner piece forms a channel between the gutters of said rails.

8. A method according to claim **7,** wherein each of said rails has two side gutters (1603, 1604), and said joiner piece (1501) is configured to fit inside both side gutters of said second rail (1602).

9. A method according to claim 8, wherein said joiner piece comprises two gutter portions (1507, 1508), each configured to fit within a side gutter (1603) of said second rail (1602), a central portion (1511) connecting the two gutter portions (1507, 1508), and an upper portion (1502) configured to fit around and underneath the downwards end of said first rail.

10. A method according to any of claims **7** to **9,** further comprising the step of locating an upstanding peg (1503) in said upper portion (1502) of said joiner piece (1501) within a channel in the underside of said first rail.

11. A method according to any of claims **7** to **10,** further comprising the step of securing the upper portion (1502) of said joiner piece to said first rail (1601) through apertures (1505, 1506) defined by said upper portion.

12. A method according to any of claims **7** to **11,** wherein:
said first rail (1601) and said second rail (1602) each have an upstanding element (408) and said steps of fixing said first rail to at least one purlin (104), and fixing said second rail to at least one other purlin (104) each comprise placing two clips (601) over the upstanding element of each rail and securing said clips to said at least one purlin;
each said clip has a downwardly facing channel, open-ended at both ends, that interlocks with the respective upstanding element such that when said rails are secured, said rails are free to move up and down the roof but not side to side; and
said method comprises, for each rail, a further step of securing one of said clips to the respective rail in an immoveable fashion at a securing point that is adjacent the joiner piece.

13. A method according to claim **12,** wherein said further step of securing said clips to the respective rail in an immoveable fashion comprises the steps of:
securing a bracket (605) to each said clip, and securing said brackets to the respective rails (1601, 1602).

14. A method according to claim **12** or claim **13,** wherein said step of securing said clip (601) to said at least one purlin (104) comprises, for each said clip, passing a fixing means (603, 604) through an aperture defined by said clip and securing said fixing means to the respective purlin.

## Patentansprüche

1. Ein Verbindungssystem bestehend aus einer oberen Leiste (1601), die über mindestens eine seitliche Abflussrinne (1603) verfügt, einer unteren Leiste (1602), die über mindestens eine seitliche Abflussrinne (1603) verfügt, und einem Verbindungsstück (1501) für die Verbindung einer Endseite der oberen Leiste (1601) mit einer Endseite der unteren Leiste (1602), wobei besagtes Verbindungsstück (1501)
ein Außenteil (1502), das derart gestaltet ist, dass es um die Außenseite der oberen Leiste (1601) herum passt, und
ein Innenteil (1503), das derart gestaltet ist, dass es in die seitliche Abflussrinne (1603) besagter unterer Leiste (1602) hinein passt, beinhaltet,
so dass besagtes Verbindungsstück (1501) bei seiner Verwendung Flüssigkeit aus der Abflussrinne (1603) besagter oberer Leiste (1601) in die Abflussrinne (1603) der unteren Leiste (1602) leitet.

2. Ein Verbindungssystem gemäß Patentanspruch **1,** bei dem eine jede besagter Leisten (1601, 1602) über zwei seitliche Abflussrinnen (1603, 1604) verfügt und besagtes Innenteil (1503) besagten Verbindungsstücks (1501) derart gestaltet ist, dass es in beide seitliche Abflussrinnen (1603, 1604) besagter unterer Leiste hinein passt.

3. Ein Verbindungssystem gemäß Patentanspruch **2,** bei dem besagtes Innenteil (1503) zwei Abflussrinnenteilstücke (1507, 1508), die beide derart gestalt sind, dass sie in eine seitliche Abflussrinne (1603, 1604) besagter unterer Leiste (1602) hineinpassen, und ein mittleres Teilstück (1511), das die zwei Abflussrinnenteilstücke miteinander verbindet, beinhaltet.

4. Ein Verbindungssystem gemäß einem jeden der Patentansprüche **1** bis **3,** bei dem das Außenteil (1502) besagten Verbindungsstücks (1501) einen aufrechten Zapfen (1504) beinhaltet, der derart gestaltet ist, dass er in einen Kanal in der Unterseite besagter oberer Leiste eingefügt werden kann.

5. Ein Verbindungssystem gemäß einem jeden der Patentansprüche **1** bis **4,** bei dem das Außenteil (1502) besagten Verbindungsstücks (1501) zwei Öffnungen (1505, 1506) umgrenzt, eine auf jeder Seite, die derart gestalt sind, dass besagtes Verbindungsstück mittels einer Sicherungsvorrichtung mit der Außenseite besagter Leiste verbunden werden kann.

6. Ein Verbindungssystem gemäß einem jeden der Patentansprüche **1** bis **5,** bei dem besagtes Innenteil (1503) des Verbindungsstücks (1501) gerippt ist.

7. Ein Verfahren für die Montage einer solaren Energiegewinnungsanordnung als Teil eines Dachs (103), wobei besagtes Dach eine Mehrzahl von Dachpfetten (104) beinhaltet, bestehend aus folgenden Schritten:
Beschaffung einer ersten Leiste (1601) und einer zweiten Leiste (1602), die im Querprofil im Wesentlichen identisch sind, wobei eine jede besagter Leisten mindestens eine seitliche Abflussrinne (1603) beinhaltet;
Befestigung besagter erster Leiste (1601) an mindestens einer Dachpfette (1705) und Befestigung besagter zweiter Leiste (1602) an mindestens einer anderen Dachpfette (1705), wobei besagte zweite Leiste mit besagter erster Leiste in der Neigungsrichtung des Dachs ausgerichtet ist, so dass die abwärts gerichtete Endseite besagter erster Leiste und die aufwärts gerichtete Endseite besagter zweiter Leiste aneinander angrenzen;
Positionierung eines Verbindungsstücks (1501) um und unter die abwärts gerichtete Endseite besagter erster Leiste; und
Anbringung besagten Verbindungsstücks in besagter seitlicher Abflussrinne (1603) besagter zweiter Leiste an der aufwärts gerichteten Endseite besagter zweiter Leiste;
so dass besagtes Verbindungsstück einen Kanal zwischen den Abflussrinnen besagter Leisten bildet.

8. Ein Verfahren gemäß Patentanspruch **7,** bei dem eine jede besagter Leisten über zwei seitliche Abflussrinnen (1603, 1604) verfügt und besagtes Verbindungsstück (1501) derart gestaltet ist, dass es in beide seitliche Abflussrinnen besagter zweiter Leiste (1602) hinein passt.

9. Ein Verfahren gemäß Patentanspruch **8,** bei dem besagtes Verbindungsstück zwei Abflussrinnenteilstücke (1507, 1508), die beide derart gestaltet sind, dass sie in eine seitliche Abflussrinne (1603) besagter zweiter Leiste (1602) hinein passen, ein mittleres Teilstück (1511), das die zwei Abflussrinnenteilstücke (1507, 1508) miteinander verbindet, und ein oberes Teilstück (1502), das derart gestaltet ist, dass es um und unter die abwärts gerichtete Endseite besagter erster Leiste passt, beinhaltet.

10. Ein Verfahren gemäß einem jeden der Patentansprüche **7** bis **9,** das des Weiteren den Schritt der Einfügung eines aufrechten Zapfens (1503) in besagtes oberes Teilstück (1502) besagten Verbindungsstücks (1501) in einem Kanal in der Unterseite besagter erster Leiste beinhaltet.

11. Ein Verfahren gemäß einem jeden der Patentansprüche **7** bis **10,** das des Weiteren den Schritt der Sicherung des oberen Teilstücks (1502) besagten Verbindungsstücks an besagter erster Leiste (1601) durch von besagtem oberen Teilstück umgrenzte Öffnungen (1505, 1506) beinhaltet.

12. Ein Verfahren gemäß einem jeden der Patentansprüche **7** bis **11,** bei dem:
besagte erste Leiste (1601) und besagte zweite Leiste (1602) jeweils über ein aufrechtes Element (408) verfügen und besagte Schritte der Befestigung besagter erster Leiste an mindestens einer Dachpfette (104) sowie der Befestigung besagter zweiter Leiste an mindestens einer anderen Dachpfette (104) beide die Positionierung von Klemmhaken (601) über dem aufrechten Element jeder Leiste und die Sicherung besagter Klemmhaken an besagter mindestens einer Dachpfette beinhalten;
jeder besagte Klemmhaken über einen abwärts verlaufenden Kanal verfügt, der an beiden Seiten offen ist und mit dem entsprechenden aufrechten Element derart ineinandergreift, dass, wenn besagte Leisten gesichert sind, besagte Leisten frei am Dach nach oben und unten gleiten können, aber nicht seitwärts; und
besagtes Verfahren für jede Leiste einen weiteren Schritt der unverrückbaren Sicherung eines der besagten Klemmhaken an der entsprechenden Leiste an einer Sicherungsstelle, die an das Verbindungsstück angrenzt, beinhaltet.

13. Ein Verfahren gemäß Patentanspruch **12,** bei dem besagter weiterer Schritt der unverrückbaren Sicherung besagter Klemmhaken an der entsprechenden Leiste die Schritte der Sicherung eines Haltewinkels (605) an jedem besagten Klemmhaken und der Sicherung besagter Haltewinkel an den entsprechenden Leisten (1601, 1602) beinhaltet.

14. Ein Verfahren gemäß Patentanspruch **12** oder Patentanspruch **13,** bei dem besagter Schritt der Sicherung besagten Klemmhakens (601) an besagter mindestens einer Dachpfette (104) für einen jeden besagten Klemmhaken beinhaltet, dass eine Befestigungsvorrichtung (603, 604) durch eine von besagtem Klemmhaken umgrenzte Öffnung geführt wird und besagte Befestigungsvorrichtung an der entsprechenden Dachpfette gesichert wird.

## Revendications

1. Un système de raccordement comprenant une traverse supérieure (1601) dotée au minimum d'une gouttière latérale (1603), d'une traverse inférieure (1602) dotée au minimum d'une gouttière latérale (1603) et d'un raccord (1501) permettant de raccorder un bout de la traverse supérieure (1601) à un bout de la traverse inférieure (1602), ledit raccord (1501) comprenant
une section extérieure (1502) configurée pour tenir autour de l'extérieur de la traverse supérieure (1601), et
une section intérieure (1503) configurée pour tenir à l'intérieur de la gouttière latérale (1603) de la traverse inférieure (1602),
de sorte qu'en cours d'utilisation ledit raccord (1501) achemine des fluides de la gouttière (1603) de ladite traverse supérieure (1601) jusqu'à la gouttière (1603) de ladite traverse inférieure (1602).

2. Un système de raccordement selon la revendication **1,** dans lequel chacune desdites traverses (1601, 1602) possède deux gouttières latérales (1603, 1604), et ladite section intérieure (1503) dudit raccord (1501) est configurée pour tenir à l'intérieur des deux gouttières latérales (1603, 1604) de ladite traverse inférieure.

3. Un système de raccordement selon la revendication **2,** dans lequel ladite section intérieure (1503) comprend deux portions de gouttière (1507, 1508), chacune étant configurée pour tenir à l'intérieur d'une gouttière latérale (1603, 1604) de ladite traverse inférieure (1602), et une portion centrale (1511) reliant les deux portions de gouttière.

4. Un système de raccordement selon une quelconque des revendications **1** à **3,** dans lequel la section extérieure (1502) dudit raccord (1501) comprend une cheville verticale (1504) configurée pour se placer dans une glissière située dans la partie inférieure de ladite traverse supérieure.

5. Un système de raccordement selon une quelconque des revendications **1** à **4,** dans lequel la section extérieure (1502) dudit raccord (1501) comprend deux ouvertures (1505, 1506), une de chaque côté, configurées de façon à permettre audit raccord d'être connecté par un dispositif de fixation sur l'extérieur de ladite traverse.

6. Un système de raccordement selon une quelconque des revendications **1** à **5,** dans lequel ladite section intérieure (1503) dudit raccord (1501) est nervurée.

7. Une méthode d'installation d'un réseau étanche de captage de l'énergie solaire dans le cadre d'un toit (103), ledit toit comprenant une série de pannes (104), comprenant les opérations suivantes :
obtention d'une première traverse (1601) et d'une deuxième traverse (1602) ayant une section transversale substantiellement identique, chacune desdites traverses comprenant au moins une gouttière latérale (1603) ;
fixation de ladite première traverse (1601) à au moins une panne (1705), et la fixation de ladite deuxième traverse (1602) à au moins une panne (1705), cette deuxième traverse étant alignée avec ladite première traverse dans la direction de la pente du toit, de sorte que l'extrémité tournée vers le bas de ladite première traverse et l'extrémité tourne vers le haut de ladite deuxième traverse sont adjacentes ;
positionnement d'un raccord (1501) autour de l'extrémité tournée vers le bas de ladite première traverse, et sous celle-ci ; et
fixation dudit raccord au sein de ladite gouttière latérale (1603) de ladite deuxième traverse, à l'extrémité tournée vers le haut de ladite deuxième traverse ;
de sorte que ledit raccord forme un canal entre les gouttières desdites glissières.

8. Une méthode selon la revendication **7,** dans laquelle chacune desdites traverses possède deux gouttières latérales (1603, 1604), et ledit raccord (1501) est configuré pour tenir à l'intérieur des deux gouttières latérales de ladite deuxième traverse (1602).

9. Une méthode selon la revendication **8,** dans laquelle ledit raccord comprend deux portions de gouttière (1507, 1508), chacune de celles-ci étant configurée de façon à tenir dans une gouttière latérale (1603) de ladite deuxième traverse (1602), une partie centrale (1511) reliant les deux portions de gouttière (1507, 1508), et une partie supérieure (1502) configurée pour être placée autour de l'extrémité tournée vers le bas de ladite première traverse, et sous celle-ci.

10. Une méthode selon une quelconque des revendications **7** à **9,** comprenant également l'opération du positionnement d'une cheville verticale (1503) dans ladite portion supérieure (1502) dudit raccord (1501) au sein d'un canal dans la partie inférieure de la dite première traverse.

11. Une méthode selon une quelconque des revendications **7** à **10,** comprenant également la fixation de la partie supérieure (1502) dudit raccord à ladite première traverse (1601) par les ouvertures (1505, 1506) pratiquées par ladite portion supérieure.

12. Une méthode selon une quelconque des revendications **7** à **11,** dans laquelle :
ladite première traverse (1601) et ladite deuxième traverse (1602) sont dotées chacune d'un rebord montant (408) et lesdites opérations de fixation de ladite première traverse à au moins une panne (104), et de ladite deuxième traverse à au moins une autre panne (104) comprennent chacune le positionnement de deux attaches (601) sur le rebord montant de chaque traverse, et la fixation desdites attaches à au moins une panne ;
chacune desdites attaches présente un profil tourné vers le bas, ouvert aux deux bouts, s'imbriquant avec le rebord montant correspondant, de sorte que lorsque lesdites traverses sont fixées, lesdites traverses peuvent se déplacer librement en haut ou en bas du toit, mais non pas latéralement ; et
ladite méthode comprend, pour chaque traverse, une opération supplémentaire consistant à fixer une desdites attaches sur la traverse correspondante de façon immuable sur un point de fixation adjacent au raccord.

13. Une méthode selon la revendication **12,** dans laquelle ladite opération de fixation supplémentaire desdites attaches à la traverse correspondante de façon immuable comporte les opérations suivantes : fixation d'un support (605) sur chacune desdites attaches, et fixation desdits supports aux traverses correspondantes (1601, 1602).

14. Une méthode selon la revendication **12** ou la revendication **13,** dans laquelle ladite opération de fixation de ladite attache (601) à au moins une panne (104) comprend, pour chacune desdites attaches, l'introduction d'un dispositif de fixation (603, 604) dans une ouverture définie par ladite attache, et la fixation dudit dispositif de fixation à la panne correspondante.
